(19) Europäisches Patentamt
European Patent Office
Office européen des brevets

(11) **EP 3 404 556 B1**

(12) **EUROPEAN PATENT SPECIFICATION**

(45) Date of publication and mention
of the grant of the patent:
**12.07.2023 Bulletin 2023/28**

(21) Application number: **16884810.9**

(22) Date of filing: **30.12.2016**

(51) International Patent Classification (IPC):
*G06Q 50/00* (2012.01)    *H04W 4/06* (2009.01)
*G06F 16/9535* (2019.01)    *H04L 67/50* (2022.01)
*H04L 67/55* (2022.01)

(52) Cooperative Patent Classification (CPC):
**G06F 16/9535; G06Q 50/01; H04L 67/535;
H04L 67/55; H04W 4/06**

(86) International application number:
**PCT/CN2016/113895**

(87) International publication number:
**WO 2017/121259 (20.07.2017 Gazette 2017/29)**

(54) **INFORMATION RECOMMENDATION METHOD AND APPARATUS, AND SERVER**

INFORMATIONSEMPFEHLUNGSVERFAHREN UND -VORRICHTUNG SOWIE SERVER

PROCÉDÉ ET APPAREIL DE RECOMMANDATION D'INFORMATIONS, ET SERVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2016 CN 201610019783**

(43) Date of publication of application:
**21.11.2018 Bulletin 2018/47**

(73) Proprietor: **Tencent Technology (Shenzhen)
Company Limited
Shenzhen, Guangdong, 518057 (CN)**

(72) Inventors:
• **LIU, Dapeng
Shenzhen,
Guangdong 518057 (CN)**
• **CAO, Xiaoqing
Shenzhen,
Guangdong 518057 (CN)**

(74) Representative: **Gunzelmann, Rainer
Wuesthoff & Wuesthoff
Patentanwälte PartG mbB
Schweigerstraße 2
81541 München (DE)**

(56) References cited:
| | |
|---|---|
| EP-A1- 3 467 754 | CN-A- 102 880 691 |
| CN-A- 102 915 307 | CN-A- 103 166 930 |
| CN-A- 104 301 207 | CN-A- 105 677 881 |
| US-A1- 2011 320 462 | US-A1- 2013 046 770 |
| US-A1- 2013 086 082 | US-A1- 2015 347 593 |

## Description

The present disclosure claims the priority to Chinese Patent Application No. 201610019783.7, titled "INFORMATION RECOMMENDATION METHOD AND APPARATUS, AND SERVER", filed on January 12, 2016 with the State Intellectual Property Office of People's Republic of China.

## TECHNICAL FIELD

The present disclosure relates to the technical field of information processing, and in particular to an information recommendation method, an information recommendation apparatus, and a server.

## BACKGROUND

With development of social applications, pushing recommended information, such as an advertisement and weather information, via the social application becomes a new approach for information service to provider recommend information to users. Similar to sharing information among one or more friends in the social application, the user can interact, such as making comments or giving the thumbs-up, with the recommended information such as the advertisement and the weather information pushed by the social application. To effectively push the recommended information, it is important to estimate probability that the user interacts, such as making comments or giving the thumbs-up, with the recommended information after the recommended information is pushed to the user. If the probability that the user interacts with the recommended information is higher, the interaction effect on the pushed recommended information is better.

At present, in pushing recommended information, normally an interest level of the user in the recommended information is measured based on a relevance degree between the user and the recommended information. If the interest level of the user on the recommended information is higher, the possibility that the *user* interacts with the recommended information is higher. Therefore, whether to push the recommended information to the user is determined on the basis of the interest level of the user on the recommended information.

US 2011/320462 A1 concerns a method and an apparatus for recommending information to users within a social network. The method builds a recommendation list with at least one two-tuple, where each two-tuple comprises a target user name and an information item and ranks the recommendation list by using two-tuples in the recommendation list as a basic unit. By selecting a two-tuple in the recommendation list, the user can recommend a corresponding information item to a user represented by a target user name. An apparatus is also provided by using a builder for building for a user a recommendation list comprising at least one two-tuple and a sorter for ranking the recommendation list by using two-tuples in the recommendation list as a basic unit, such that, by selecting a two-tuple in the recommendation list.

US 2013/046770 A1 concerns a technique to provide more contextually and temporally relevant information to its users, in which a social networking system surfaces relevant information about a target user with whom an recipient user is likely to interact. The social networking system predicts whether the recipient user is likely to be in contact with a target user, either currently or in the near future. If contact is predicted, the system determines information about the target user that that the recipient user may find of interest for their interaction. To determine what information may be of interest, the system determines a relevance score for information items about that target user. The system can then use the relevance scores to decide whether and which information items to surface to the recipient user.

## SUMMARY

In view of this, the present invention provides an information recommendation method according to claim 1, an information recommendation apparatus according to claim 6, and a server according to claim 7. Further aspects of the present invention are defined in the dependent claims.

In the above technical solutions, based on a discovery that the rule of interaction to be made by a user with the shared information published by a friend is relevant to an influence of the friend on interaction to be made by the user with recommended information, in an embodiment of the present disclosure, the data of interaction made by the target user with the previously shared information published by the target friend is determined for the target friend among the one or more friends of the target user, who has interacted with the target recommended information. Then the influence degree of the target friend on the interaction to be made by the target user with the target recommended information is determined. Then the influence degree of each of the target friends on the interaction to be made by the target user with the target recommended information is integrated, to determine the target influence degree of the friend who has interacted with the target recommended information, on the interaction to be made by the target user with the target recommended information. The probability degree of the interaction to be made by the target user with the target recommended information is determined based on the target influence degree, for pushing the target recommended information. Because the influence degree of the friend on the interaction to be made by the target user with the target recommended information is referred to in determining the probability degree of the interaction to be made by the target user with the target recommended information in an embodiment of the present disclosure, accuracy of the determined probability that the user interacts with the recommended information is increased, so as to improve the effectiveness of pushing the recommended information.

## BRIEF DESCRIPTION OF THE DRAWINGS

Figure 1 is a flowchart of an information recommendation method according to an embodiment of the present disclosure;

Figure 2 is a flowchart of a method for determining an interaction weight and a preset constant according to an embodiment of the present disclosure;

Figure 3 is a flowchart of another information recommendation method according to an embodiment of the present disclosure;

Figure 4 is a flowchart of yet another information recommendation method according to an embodiment of the present disclosure;

Figure 5 is a schematic diagram of relationships in a circle of friends;

Figure 6 is a block diagram of an information recommendation apparatus according to an embodiment of the present disclosure;

Figure 7 is a block diagram of an influence degree determining module according to an embodiment of the present disclosure;

Figure 8 is a block diagram of a linear calculation unit according to an embodiment of the present disclosure;

Figure 9 is a block diagram of another information recommendation apparatus according to an embodiment of the present disclosure;

Figure 10 is a block diagram of a target influence degree determining module according to an embodiment of the present disclosure;

Figure 11 is another block diagram of a target influence degree determining module according to an embodiment of the present disclosure; and

Figure 12 is a hardware block diagram of yet another information recommendation apparatus according to an embodiment of the present disclosure.

## DETAILED DESCRIPTION OF THE EMBODIMENTS

After a friend of a user interacts with recommended information, a probability that the user interacts with the recommended information is increased. In a case that a certain type of interaction (such as making comments or giving the thumbs-up) is made by the friend of the user with the recommended information, a probability that the same type of interaction is made by the user with the recommended information is increased.

On the basis of the above, with an information recommendation method according to an embodiment of the present disclosure, the recommended information is pushed based on the rule that an interaction to be made by the target user with the recommended information is influenced by the interaction previously made by the friend of the target user with the recommended information, thereby increasing accuracy of determined probability that the user interacts with the recommended information, and improving effectiveness of pushing the recommended information.

The technical solutions according to embodiments of the present disclosure will be described clearly and completely in conjunction with the drawings in embodiments of the present closure. Apparently, the described embodiments are only a part of the embodiments according to the present disclosure, rather than all the embodiments. Any other embodiments obtained by those skilled in the art based on the embodiments of the present disclosure without any creative efforts fall within the scope of protection of the present disclosure.

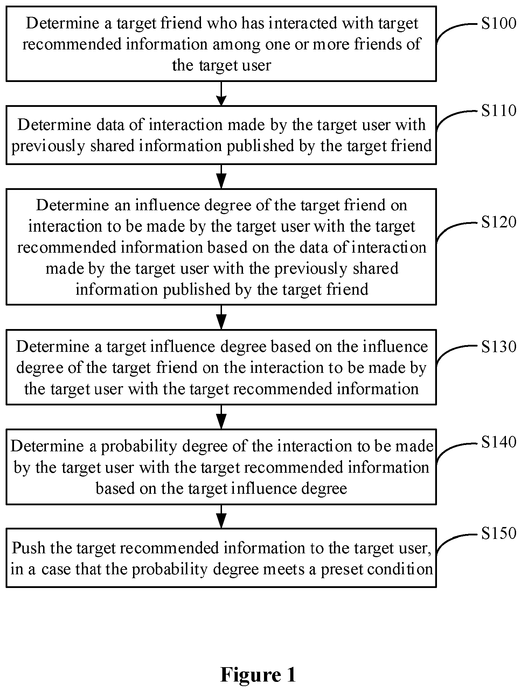

Figure 1 is a flowchart of an information recommendation method according to an embodiment of the present disclosure. The method may be applied to a server, where the server may collect user behavioral data of a social application, analyze and process the data, and push the recommended information.

Referring to Figure 1, the information recommendation method provided according to an embodiment of the present disclosure may include step S 100 to step S150.

In step S 100, a target friend who has interacted with target recommended information among one or more friends of a target user is determined.

The target recommended information is information to be recommended to the target user. In an embodiment of the present disclosure, the target recommended information has been pushed to at least one friend of the target user, while has not been pushed to the target user. A target friend among the at least one friend has interacted (such as making a comment or giving the thumbs-up) with the target recommended information.

In step S 110, data of interaction made by the target user with previously shared information published by the target friend is determined.

The social application provides a function of sharing information among friends, with which a user can share information, such as an article and music, with the friend of the user, and the friend can make interaction, such as making comments, forwarding, or giving the thumbs-up, with the information shared by the user. Similarly, the user can also interact with information shared by the friend of the user.

In an embodiment of the present disclosure, for a target friend, interaction made by the target user with the previously shared information published by the target friend in a preset time period may be analyzed to obtain the interaction data.

In an embodiment of the present disclosure, for each determined target friend, the number of interactions of each preset type made by the user with the previously shared information published by the target friend in a preset time period may be analyzed. The interactions of a preset type may refers to an interactive operation performed on the shared information by the user such as giving the thumbs-up and making a comment, which may be determined based on actual usage requirements. Therefore, according to an embodiment of the present disclosure, the number of interactions of a preset type can serve as an eigenvector, and each of the eigenvectors is collected to obtain an eigenvector set, which serves as the data of interaction made by the target user with the previously shared information published by the target friend.

In an embodiment of the present disclosure, for each determined target friend, the number of interactions of each preset type made by the user with the previously shared information published by the target friend in a preset time period, may be analyzed to obtain the integrated number of interactions by integrating the number of interactions of each preset types. The integrated number of interactions serves as the data of interaction made by the target user with the previously shared information published by the target friend.

In step 120, an influence degree of the target friend on interaction to be made by the target user with the target recommended information is determined based on the data of interaction made by the target user with the previously shared information published by the target friend.

On the basis of a discovery that the interaction made by the friend of the user with the recommended information leads to a high probability that the user interacts with the recommended information, according to an embodiment of the present disclosure, the rule that an interaction to be made by the user with the recommended information is influenced by the interaction previously made by the friend of the user with the recommended information, may be quantified as the influence degree of the target friend on the interaction to be made by the target user with the target recommended information, and the rule of interaction made by the user with the shared information published by the friend is quantified as the data of interaction made by the target user with the previously shared information published by the target user.

Then, based on a pre-analyzed functional relationship between a influence degree of the friend on the interaction to be made by the user with the recommended information, and data of interaction made by the user with the previously shared information published by the friend, the influence degree of the target friend on the interaction to be made by the target user with the target recommended information is determined for each of the target users, based on the interaction data and the pre-analyzed functional relationship.

In an embodiment of the present disclosure, by analyzing history behavior data, it is found that the rule of interaction to be made by the target user with the shared information published by the friend, has an extremely high similarity with the rule of interaction made by the target user with the recommended information after being influenced by the interaction made by the friend of the target user interacts with the recommended information, which shows a linear relationship. That is, the rule of interaction made by the target user with the recommended information after being influenced by the interaction already made by the friend of the target user with the recommended information has a linear relationship with the rule of interaction to be made by the target user with the shared information published by the friend. Therefore, for each of the target friends, after obtaining the data of interaction made by the target user with the previously shared information published by the target friend, according to an embodiment of the present disclosure, the influence degree of the target friend on the interaction to be made by the target user with the target recommended information can be calculated based on the linear relationship.

The linear relationship, which is between the rule of interaction made by the user with the recommended information after being influenced by the interaction made by the friend of the user with the recommended information and the rule of interaction to be made by the user with the shared information published by the friend, is only an example of the functional relationship mentioned above. In practice, the relationship may also be other functional relationships than the linear relationship.

In step S130, a target influence degree is determined based on the influence degree of the target friend on the interaction to be made by the target user with the target recommended information.

The target influence degree is an overall influence degree of at least one target friend on the interaction to be made by the target user with the target recommended information.

In an embodiment of the present disclosure, the influence degree of each of the target friends on the interaction to be made by the target user with the target recommended information may be summed up, to obtain the target influence degree.

Time when each of the target friends interacts with the target recommended information is different from one another, that is, some interactions happen earlier, while other interactions happen later. The different time of the interactions made by the target friend with the target recommended information have different influence degrees on the interaction to be made by the target user with the target recommended information. Therefore, according to an embodiment of the present disclosure, the influence degree of interactions happened earlier may be adjusted with a time attenuation factor, so that the influence degree of each of the target friends on the interaction to be made by the target user with the target recommended information matches the timing of the interaction, thereby improving the accuracy of the target influence degree determined by summing up the influence degree of each of the target friends on the interaction to be made by the target user with the target recommended information.

In step S 140, a probability degree of the interaction to be made by the target user with the target recommended information is determined based on the target influence degree.

In an embodiment of the present disclosure, the target influence degree may be combined with a determined interest level of the target user in the target recommended information, to determine the probability degree of the interaction to be made by the target user with the target recommended information. In an embodiment of the present disclosure, the target influence degree may also solely serve as the probability degree of the interaction to be made by the target user with the target recommended information.

In step S 150, the target recommended information is pushed to the target user, in a case that the probability degree meets a preset condition.

In an embodiment of the present disclosure, the preset condition may be determined according to actual usage demands.

It can be seen that, based on a discovery that the rule of interaction made by the user with the shared information published by a friend is relevant to an influence of the friend on interaction to be made by the user with recommended information, in an embodiment of the present disclosure the data of interaction made by the target user with the previously shared information published by the target friend is determined, for the target friend among the one or more friends of the target user, who has interacted with the target recommended information. Then the influence degree of the target friend on the interaction to be made by the target user with the target recommended information is determined. Then the influence degree of each of the target friends on the interaction to be made by the target user with the target recommended information is integrated to determine the target influence degree of the friend who has interacted with the target recommended information, on the interaction to be made by the target user with the target recommended information is determined. The probability degree of the interaction to be made by the target user with the target recommended information is determined based on the target influence degree, for pushing the target recommended information. Because the influence degree of the friend on the interaction to be made by the target user with the target recommended information is referred to in determining the probability degree of the interaction to be made by the target user with the target recommended information in an embodiment of the present disclosure, accuracy of the determined probability that the user interacts with the recommended information is increased, so as to improve the effectiveness of pushing the recommended information.

In an embodiment of the present disclosure, the data of interaction made by the target user with the previously shared information published by the target friend has the linear relationship with the influence degree of the target friend on the interaction to be made by the target user with the target recommended information. Therefore, according to an embodiment of the present disclosure, the influence degree of each of the target friends on the interaction to be made by the target user with the target recommended information may be determined based on the linear relationship and data of interaction made by the target user with the previously shared information published by the target friends.

The linear relationship is mainly expressed by a monadic linear regression equation. According to an embodiment of the present disclosure, the data of interaction made by the target user with the previously shared information published by the target friend, and the influence degree of the target friend on the interaction to be made by the target user with the target recommended information, serve as variables of the monadic linear regression equation. Then equation is solved by calculating a coefficient and a constant with the monadic linear regression equation. By the equation, an influence degree corresponding to interaction data can be calculated.

According to an embodiment of the present disclosure, the influence degree of each of the target friends on the interaction to be made by the target user with the target recommended information can be calculated by the following equation.

Based on an equation $c_{ij} = w \cdot n_{ij} + b$, the influence degree of a target friend on the interaction to be made by the target user with the target recommended information is determined.

Denoting the target friend as $j$ and the target user as $i$ in the equation, $c_{ij}$ is the influence degree of the target friend $j$ on the interaction to be made by the target user $i$ with the recommended information, $n_{ij}$ is the number of interactions made by the target user $i$ with the previously shared information published by the target friend $j$, $w$ is a preset interaction weight, and $b$ is a preset constant.

To solve the above equation, it is required to determine the preset interaction weight $w$ and the preset constant $b$ in an embodiment of the present disclosure. Then after determining the data $n_{ij}$ of interaction made by the target user with the previously shared information published by the target friend, the corresponding $c_{ij}$ can be obtained.

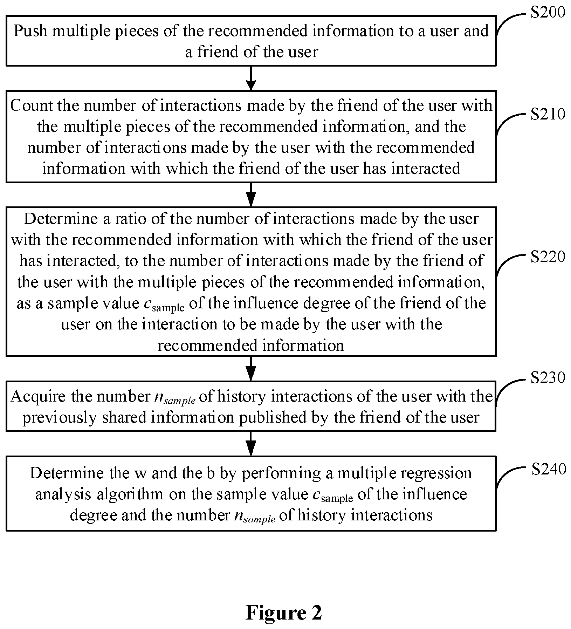

Figure 2 shows a flowchart of a method for determining the interaction weigh $w$ and the preset constant $b$. Referring to Figure 2, the method may include step S200 to step S240.

In step S200, multiple pieces of the recommended information are pushed to a user and a friend of the user.

The user and the friend of the user in the step S200 may be a user sampled for determining $w$ and $b$, and the friend corresponding to the sampled user.

In step S210, the number of interactions made by the friend of the user with the multiple pieces of the recommended information is counted, and the number of interactions made by the user with the recommended information with which the friend of the user has interacted is counted.

For example, 10 pieces of recommended information are pushed to the user and the friend of the user. The friend of the user interacts with all the 10 pieces of recommended information. After the friend of the user interacts with the 10 pieces of the recommended information, the user interacts with only 3 of the 10 pieces of information. Then it can be determined that the number of interactions made by the friend of the user with the multiple pieces of the recommended information is 10, and the number of interactions made by the user with the recommended information with which the friend of the user has interacted is 3.

The number of interactions made by the user with the recommended information with which the friend of the user has interacted is the number of interactions made by the user with the recommended information under the condition that the friend of the user has interacted with the recommended information. In a case that the friend of the user did not interact with the recommended information before the user interacts with the recommended information, the interaction made by the user with the recommended information which has not been interacted with the friend of the user, should not be counted into the number of interactions made by the user with the recommended information with which the friend of the user has interacted.

In step 220, a ratio of the number of interactions made by the user with the recommended information with which the friend of the user has interacted, to the number of interactions made by the friend of the user with the multiple pieces of the recommended information, is determined as a sample value $c_{sample}$ of the influence degree of the friend of the user on the interaction to be made by the user with the recommended information.

For example, in a case that the number of interactions made by the friend of the user with the multiple pieces of the recommended information is 10 and the number of interactions made by the user with the recommended information with which the friend of the user has interacted is 3, the sample value $c_{sample}$ of the influence degree of the friend of the user on the interaction to be made by the user with the recommended information is determined to be 3/10.

In an embodiment of the present disclosure, the user may have multiple friends. The number of interactions made by a friend of the user with the multiple pieces of the recommended information, and the number of interactions made by the user with the recommended information with which the friend of the user has interacted, may be determined for each of the friends of the user, and then the influence degree corresponding to each of the friends of the user is calculated as the sample value $c_{sample}$ of the influence degree.

Apparently, in an embodiment of the present disclosure, the user may only have one friend.

In step 230, the number $n_{sample}$ of history interactions made by the user with the previously shared information published by the friend of the user is acquired.

The step 230 may be performed as the step S110 shown in Figure 1.

In step S240, the $w$ and the $b$ are determined by performing a multiple regression analysis algorithm on the sample value $c_{sample}$ of the influence degree and the number of the history interactions $n_{sample}$.

According to an embodiment of the present disclosure, the monadic linear regression equation may be established. Using the sample value $c_{sample}$ of the influence degree and the number of the history interactions $n_{sample}$ as variables, $w$ and $b$ are calculated with the multiple regression analysis algorithm.

After calculating $w$ and $b$, the influence degree $c_{ij}$ of the target friend on the interaction to be made by the target user with the target recommended information may be calculated on the basis of the data $n_{ij}$ of interaction made by the target user with the previously shared information published by the target friend.

In this embodiment of the present disclosure, the number $n_{ij}$ of interactions made by the target user $i$ with the previously shared information published by the target friend $j$ may be an integrated number of interactions obtained by integrating the number of interactions of each preset type made by the target user $i$ with the previously shared information published by the target friend $j$, and the corresponding $w$ may be an integrated interaction weight. Correspondingly, the number $n_{sample}$ of history interactions may be an integrated number of interactions in the calculation shown in Figure 2.

According to an embodiment of the present disclosure, the type of interaction made by the target user with the previously shared information published by the target friend may be preset. Accordingly, the number of interactions of each preset type made by the target user with the previously shared information published by the target friend is represented as an eigenvector. Each preset type corresponds to a type of interactions. The eigenvectors are collected to acquire an eigenvector set, which serves as the data of interaction made by the target user with the previously shared information published by the target friend.

For example, the preset interaction type includes making comments or giving the thumbs-up by the target user for the previously shared information published by the target friend, and a chatting frequency (such as an average number of chatting in each day) between the target user and the target friend. According to an embodiment of the present disclosure, for each of the target friends, the number of times of making comments and the number of times of giving the thumbs-up by the target user for the previously shared information published by the target friend, and the chatting frequency between the target user and the target friend may be obtained as eigenvectors, which are collected to acquire the eigenvector set $n_{ij}$.

The $n_{ij}$ may be expressed as $n_{ij}=(h_{ij},k_{ij},m_{ij})$, where $h_{ij}$ is the number of times of giving the thumbs-up by the target user $i$ for the previously shared information published by the target friend $j$, $k_{ij}$ is the number of times of making comments by the target user $i$ on the previously shared information published by the target friend $j$, and $m_{ij}$ is the chatting frequency between the target user $i$ and the target friend $j$.

Accordingly, $w$ is expressed as $w=(w_h,w_k,w_m)$, where $w_h$ is a weight of giving the thumbs-up, $w_k$ is a weight of making comments, and $w_m$ is a weight of chatting frequency.

Accordingly, in the method shown in Figure 2, the number $n_{sample}$ of history interactions may be the eigenvector set of the numbers of preset types of interactions, and $w$ may be a set of weights for all the preset types.

The giving the thumbs-up and the making comments by the target user for the previously shared information published by the target friend, and the chatting frequency between the target user and the target friend as shown above, are only examples of the preset interaction type. The specific form of the preset interaction type may be determined based on usage, and apparently, there may be only one preset interaction type.

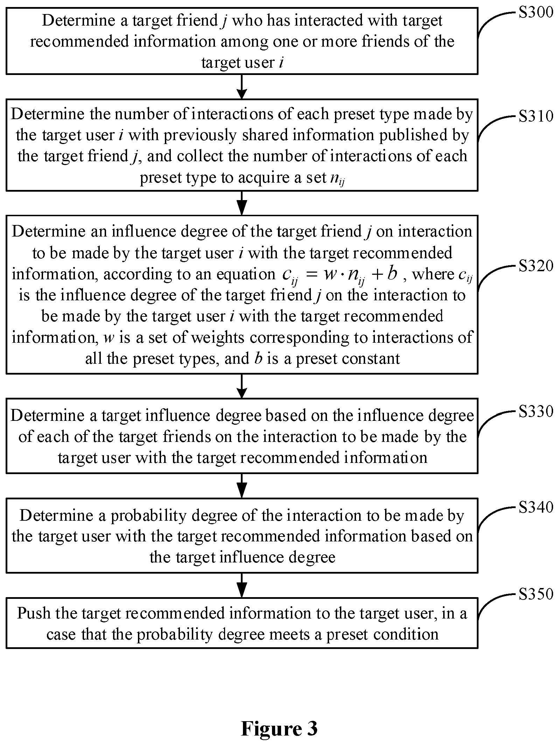

Figure 3 shows another flowchart of an information recommendation method according to an embodiment of the present disclosure, and the method may be applied to a server or other devices. Referring to Figure 3, the method may include step S300 to step S350.

In step S300, at least one target friend j who has interacted with target recommended information among one or more friends of a target user $i$ is determined.

In step S310, the number of interactions of each preset type made by the target user $i$ with the previously shared information published by the target friend $j$ is determined, and the numbers of interactions of each preset type are collected to acquire a set $n_{ij}$.

In step S320, an influence degree of the target friend $j$ on interaction to be made by the target user $i$ with the target recommended information is determined according to an equation $c_{ij} = w \cdot n_{ij} + b$ , so as to acquire the influence degree of each of the target friends on the interaction to be made by the target user with the target recommended information, where $c_{ij}$ is the influence de-

gree of the target friend $j$ on the interaction to be made by the target user $i$ with the target recommended information, $w$ is a preset of weights of all the preset types, and $b$ is a preset constant.

In step S330, a target influence degree is determined based on the influence degree of each of the target friends on the interaction to be made by the target user with the target recommended information.

In step S340, a probability degree of the interaction to be made by the target user with the target recommended information is determined based on the target influence degree.

In step S350, the target recommended information is pushed to the target user, in a case that the probability degree meets a preset condition.

In this embodiment of the present disclosure, after the influence degree of each of the target friends on the interaction to be made by the target user with the target recommended information is obtained, the influence degree of each of the target friends on the interaction to be made by the target user with the target recommended information is integrated to acquire the target influence degree.

The target influence degree may be determined by determining the target influence degree according to

$$InfluScore = \sum_{j \in N} c_{ij}$$

an equation , where *InfZuScore* is the target influence degree, and $N$ is a set of at least one target friend who has interacted with the target recommended information among the one or more friends of the target user. That is, the influence degrees of the target friends on the interaction to be made by the target user with the target recommended information are summed up to acquire the target influence degree.

Alternatively, the target influence degree may be determined by determining the target influence degree according to an equation *InfluScore = newc_{ij} + f · Inftuscore_old*, where *InfluScore* is the target influence degree, *newc_{ij}* is an influence degree of the target friend, who made the latest interaction with the target recommended information, on the interaction to be made by the target user with the target recommended information , *f* is a current time attenuation factor, and *InfluScore_old* is a sum of the influence degrees of other target friends. A calculation method for *InfluScore_old* is the same as that for *InfluScore,* and is not further described here.

The timing of making interactions by the target friends with the target recommended information is different from one another, and different timing of the interactions leads to a difference in the influence degrees of the target friends on the interaction to be made by the target user with the target recommended information. Therefore, when a new target friend interacts with the target recommended information, the influence degree generated by other friend previously should be attenuated. That is, *InfluScore = newc_{ij} + f · Influscore_old.* Ap-

parently, *InfluScore_old* is also attenuated with interaction time.

For example, the target friends A1, A2 and A3 are friends influencing the target user, and the target friends A1, A2 and A3 interacts with the target recommended information in sequence. When A2 interacts with the target recommended information, the target influence degree is calculated as the influence degree of A2+$f2$*the influence degree of A1. When A3 interacts with the target recommended information, the target influence degree is calculated as the influence degree of A3+$f3$*(the influence degree of A2+$f2$*the influence degree of A1).

The time attenuation factor $f$ may be a reciprocal of the current time, for example, $f2$ may be a reciprocal of the time when A2 interacts with the target recommended information, which is also true for $f3$.

After determining the target influence degree, according to an embodiment of the present disclosure, the probability degree of the interaction to be made by the target user with the target recommended information may be determined by combing the target influence degree and an interest level of the target user in the target recommended information which is determined by conventional technology.

According to an embodiment of the present disclosure, the interest level of the target user in the target recommended information may be determined, and then the probability degree of the interaction to be made by the target user with the target recommended information is determined based on the interest level and the target influence degree.

In an embodiment of the present disclosure, the interest level of the target user in the target recommended information may be determined by any conventional technology.

The interest level and the target influence degree may be combined by taking the interest level and the target influence degree as inputs to a model, such as a logistic regression model, to calculate an output result (that is, the probability degree of the interaction to be made by the target user with the target recommended information).

In an embodiment of the present disclosure, the interest level and the target influence degree may be summed up.

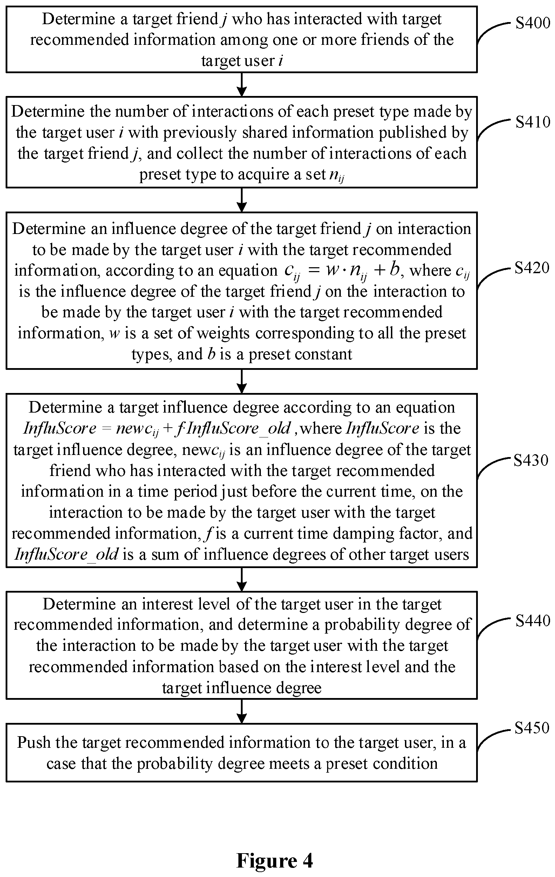

Figure 4 shows yet another flowchart of an information recommendation method according to an embodiment of the present disclosure, and the method may be applied to a server or other devices. Referring to Figure 4, the method may include step S400 to step S450.

In step S400, at least one target friend $j$ who has interacted with target recommended information among one or more friends of a target user $i$ is determined.

In step S410, the number of interactions of each preset type made by the target user $i$ with previously shared information published by the target friend $j$ is determined, and the numbers of interactions of each preset type are collected to acquire a set $n_{ij}$.

In step S420, an influence degree of the target friend $j$ on interaction to be made by the target user $i$ with the target recommended information is determined according to an equation $c_{ij} = w \cdot n_{ij} + b$, so as to acquire the influence degree of each of the target friends on the interaction to be made by the target user with the target recommended information, where $c_{ij}$ is the influence degree of the target friend $j$ on the interaction to be made by the target user $i$ with the target recommended information, $w$ is a set of weights of all the preset types, and $b$ is a preset constant.

In step S430, a target influence degree is determined, according to an equation $InfluScore = newc_{ij} + f \cdot Influscore\_old,$ where $InfluScore$ is the target influence degree, $newc_{ij}$ is an influence degree of the target friend who made the latest interaction with the target recommended information, on the interaction to be made by the target user with the target recommended information, $f$ is a current time attenuation factor, $InfluScore\_old$ is a sum of the influence degrees of other target users than $newc_{ij}$. A calculation method for $InfluScore\_old$ is the same as that for $InfluScore,$ which is not described here.

In step S440, an interest level of the target user in the target recommended information is determined, and a probability degree of the interaction to be made by the target user with the target recommended information is determined based on the interest level and the target influence degree.

In step S450, the target recommended information is pushed to the target user, in a case that the probability degree meets a preset condition.

In an embodiment of the present disclosure, after the probability degree of the interaction to be made by the target user with the target recommended information is obtained, it may be determined whether the probability degree is larger than a preset probability degree. In a case that the probability degree is larger than the preset probability degree, it is determined that the probability meets the preset condition, and then the target recommended information is pushed to the target user.

The target recommended information may be one of multiple pieces of candidate recommended information. According to an embodiment of the present disclosure, the probability degree of the interaction to be made by the target user with each of the candidate recommended information may be determined in the above manner of determining the probability degree, thereby ranking the candidate recommended information based on their probability degree after determining the probability degree of the interaction to be made by the target user with each of the candidate recommended information. In a case that a rank of the target recommended information meets a preset rank condition, it is determined that the probability degree meets the preset condition, and then the target recommended information is pushed to the target user. In a case that a rank of the target recommended information is in a preset range of rank, it can be determined that the probability degree meets the preset condition, and the target recommended information can be pushed to the target user.

An application of the information recommendation method according to an embodiment of the present disclosure is to push advertisements, which is taken as an example to explain an application of the information recommendation method according to an embodiment of the present disclosure.

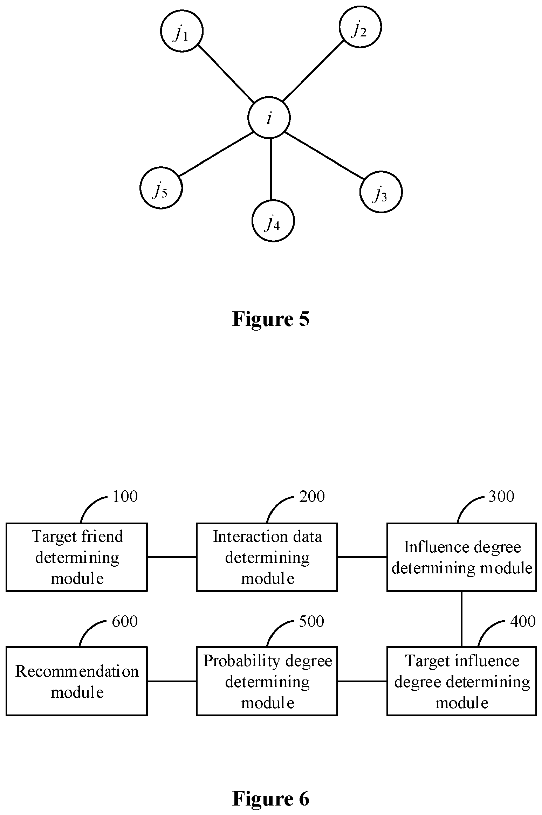

Figure 5 shows relationships in a circle of friends, where the circle of friends is a friend social circle provided by a social application. Referring to Figure 5, it is assumed that the friends of the target user $i$ are $j_1, j_2, j_3, j_4$ and $j_5$, and $j_1, j_2$ and $j_3$ interact with the advertisement respectively at time $t_1, t_2$ and $t_3$, and $t_1 < t_2 < t_3$; $j_4$ does not interact with the advertisement although the advertisement can be viewed by $j_4$, and $j_5$ cannot view the advertisement. Therefore, only the friends $j_1, j_2$ and $j_3$ influence the user $i$, and it is determined that the target friends who have interacted with the advertisement among the one or more friends of the target user $i$ are $j_1, j_2$ and $j_3$.

For the friend $j_1$, the number of interactions of each preset type made by the user $i$ with the previously shared information published by the friend $j_1$ in a preset time period may be determined, and the set of the numbers of interactions of all the preset types serves as the number $n_{ij1}$ of interactions made by the user $i$ with the previously shared information published by the friend $j_1$. The preset type may include giving the thumbs-up or making comments by the user $i$ for the previously shared information published by the friend $j_1$, and the chatting frequency between the user $i$ and the friend $j_1$, which apparently may also be customized otherwise.

For the friend $j_2$, the number of interactions of each preset type made by the user $i$ with the previously shared information published by the friend $j_2$ in a preset time period can be determined, and the set of the numbers of interactions of all the preset types serves as the number $n_{ij2}$ of interactions made by the user $i$ with the previously shared information published by the friend $j_2$.

For the friend $j_3$, the number of interactions of each preset type made by the user $i$ with the previously shared information published by the friend $j_3$ in a preset time period can be determined, and the set of the numbers of interactions of all the preset types serves as the number $n_{ij3}$ of interactions made by the user $i$ with the previously shared information published by the friend $j_3$.

For the friend $j_1$, the influence degree of the friend $j_1$ on the interaction to be made by the user $i$ with the advertisement is determined according to an equation $c_{ij1} = w \cdot n_{ij1} + b$. For the friend $j_2$, the influence degree of the friend $j_2$ on the interaction to be made by the user $i$ with the advertisement is determined according to an equation $c_{ij2} = w \cdot n_{ij2} + b$. For the friend $j_3$, the influence degree of the friend $j_3$ on the interaction to be made by the user $i$ with the advertisement is determined according to an equation $c_{ij3} = w \cdot n_{ij3} + b$; where $w$ is a set of pre-calculated weights for all the preset types, and $b$ is a pre-calculated constant.

After $c_{ij1}$, $c_{ij2}$ and $c_{ij3}$ are obtained, because the timing of the interactions between the friends $j_1, j_2$ and $j_3$ and the advertisement is $t_1$, $t_2$ and $t_3$ respectively, and $t_1 < t_2 < t_3$, by taking attenuation of the influence degree with time into account, the target influence degree may be calculated as: $c_{ij3} + f3 \, (c_{ij2} + f2 \, c_{ij1})$, where $f2$ corresponds to $t_2$ and may be a reciprocal of $t_2$, and $f3$ corresponds to $t_3$ and may be a reciprocal of $t_3$.

After the target influence degree is obtained, the target influence degree and the interest level of the user $i$ in the advertisement may be combined to determine the probability degree of the interaction to be made by the user $i$ with the advertisement, so as to determine the rank of the advertisement among candidate advertisements on the basis of the probability degree of the interaction to be made by the user $i$ with the advertisement. In a case that the determined rank is in a preset range of rank, the advertisement is pushed to the user $i$. After the advertisement is pushed to the user $i$, because the probability that the user $i$ interacts with the advertisement is high, an interaction effect of pushing the advertisement is increased, so that the effectiveness of pushing the advertisement is improved.

With an information recommendation method according to an embodiment of the present disclosure, the accuracy of determined probability degree of the interaction to be made by the user with the recommended information is increased, so that the effectiveness of pushing the recommended information is improved.

Hereinafter an information recommendation apparatus according to an embodiment of the present disclosure is described. The information recommendation apparatus described hereinafter and the information recommendation method may be referred to each other.

Figure 6 is a block diagram of an information recommendation apparatus according to an embodiment of the present disclosure, and the apparatus may be applied to a server. Referring to Figure 6, and the information recommendation apparatus may include a target friend determining module 100, an interaction data determining module 200, an influence degree determining module 300, a target influence degree determining module 400, a probability degree determining module 500, and a recommendation module 600.

The target friend determining module 100 is configured to determine a target friend who has interacted with target recommended information among one or more friends of a target user.

The interaction data determining module 200 is configured to determine data of interaction made by the target user with previously shared information published by the target friend.

The influence degree determining module 300 is configured to determine an influence degree of the target friend on interaction to be made by the target user with the target recommended information based on the data of interaction made by the target user with the previously shared information published by the target friend.

The target influence degree determining module 400 is configured to determine a target influence degree based on the influence degree of the target friend on the interaction to be made by the target user with the target recommended information.

The probability degree determining module 500 is configured to determine a probability degree of the interaction to be made by the target user with the target recommended information based on the target influence degree.

The recommendation module 600 is configured to push the target recommended information to the target user, in a case that the probability degree meets a preset condition.

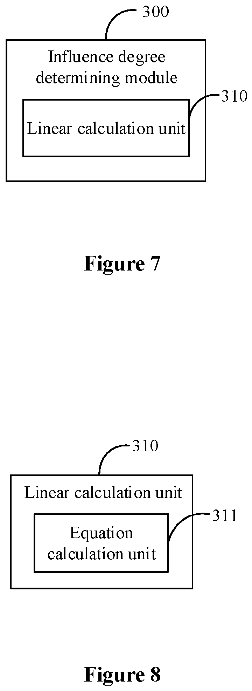

The data of interaction made by the target user with the previously shared information published by the target friend is in a linear relationship with the influence degree of the target friend on the interaction to be made by the target user with the target recommended information. Figure 7 shows an optional structure of the influence degree determining module 300. Referring to Figure 7, the influence degree determining module 300 may include a linear calculation unit 310.

The linear calculation unit 310 is configured to determine the influence degree of the target friend on the interaction to be made by the target user with the target recommended information based on the linear relationship and the data of interaction made by the target user with the previously shared information published by the target friends.

Figure 8 shows an optional structure of the linear calculation unit 310. Referring to Figure 8, the linear calculation unit 310 may include an equation calculation unit 311.

The equation calculation unit 311 is configured to determine an influence degree of one target friend on the interaction to be made by the target user with the target recommended information, according to an equation $c_{ij} = w \cdot n_{ij} + b$, where $c_{ij}$ is the influence degree of the target friend $j$ on the interaction to be made by the target user $i$ with the target recommended information, $n_{ij}$ is the number of interactions made by the target user $i$ with the previously shared information published by the target friend $j$, $w$ is a preset interaction weight, and b is a preset constant.

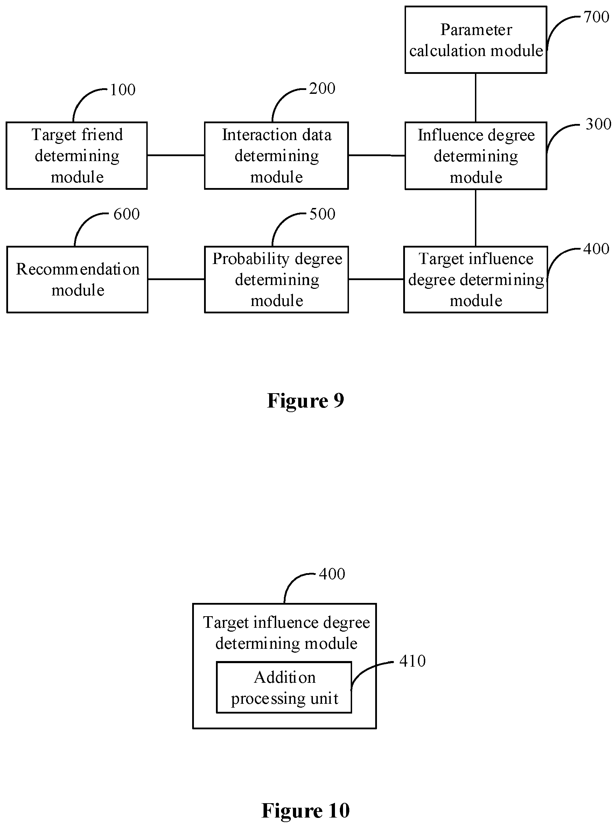

Figure 9 shows another block diagram of an information recommendation apparatus according to an embodiment of the present disclosure. As shown in conjunction with Figure 6, Figure 8 and Figure 9, the apparatus may further include a parameter calculation module 700.

The parameter calculation module 700 is configured to push multiple pieces of the recommended information to a user and a friend of the user; count the number of interactions made by the friend of the user with the multiple pieces of the recommended information, and the number of interactions made by the user with the recommended information with which the friend of the user has interacted; determine a ratio of the number of interactions made by the user with the recommended information with which the friend of the user has interacted, to the number of interactions made by the friend of the user with the multiple pieces of the recommended information, as a sample value $c_{sample}$ of the influence degree of the friend of the user on the interaction to be made by the user with the recommended information; acquire the number $n_{sample}$ of history interactions made by the user with the previously shared information published by the friend of the user; and determine the $w$ and the $b$ by performing a multiple regression analysis algorithm on the sample value $c_{sample}$ of the influence degree and the number $n_{sample}$ of history interactions.

The $n_{ij}$ includes a set of the numbers of interactions of all the preset types made by the target user $i$ with the previously shared information published by the target friend $j$. Accordingly, the $w$ includes a set of the weights of all the preset types.

Figure 10 shows an optional structure of the target influence degree determining module 400. Referring to Figure 10, the target influence degree determining module 400 may include an addition processing unit 410.

The addition processing unit 410 is configured to determine the target influence degree according to an

$$InfluScore = \sum_{j \in N} c_{ij}$$

equation , where *InfZuScore* is the target influence degree, and *N* is a set of at least one target friend who has interacted with the target recommended information among the one or more friends of the target user.

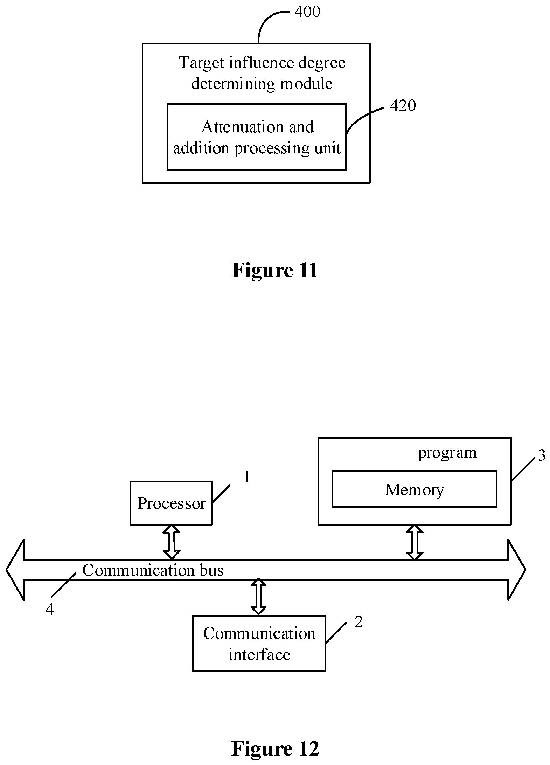

Figure 11 shows another optional structure of the influence degree determining module 400 according to an embodiment of the present disclosure. Referring to Figure 11, the target influence degree determining module 400 may include an attenuation and addition processing unit 420.

The attenuation and addition processing unit 420 is configured to determine the target influence degree according to an equation *InfluScore = newc$_{ij}$ + f · Influscore_old,* where *InfluScore* is the target influence degree, newc$_{ij}$ is an influence degree of the target friend, who has interacted with the target recommended information in a a time period just before the current time, on the interaction to be made by the target user with the target recommended information, *f* is a current time attenuation factor, *InfluScore_old* is a sum of the influence degrees of other target users than newc$_{ij}$, and a calculation method for *InfluScore_old* is the same as that for *InfluScore,* which is not described here.

The probability degree determining module 500 may be configured to determine an interest level of the target user in the target recommended information, and determine a probability degree of the interaction to be made by the target user with the target recommended information based on the interest level and the target influence degree.

In an aspect, the recommendation module 600 may be configured to determine that the probability degree meets the preset condition and push the target recommended information to the target user, in a case that the probability degree is greater than a preset probability degree.

In another aspect, the recommendation module 600 may be configured to rank candidate recommended information including the target recommended information according to the probability degree of each candidate recommended information, after determining the probability degree of interaction to be made by the target user with each candidate recommended information, and determine that the probability degree meets the preset condition and push the target recommended information to the target user, in a case that a rank of the target recommended information meets a preset rank condition.

With the information recommendation apparatus according to an embodiment of the present disclosure, the accuracy of determined probability degree of the interaction to be made by the user with the recommended information is increased, so that the effectiveness of pushing the recommended information is improved.

Optionally, Figure 12 shows a hardware block diagram of another information recommendation apparatus according to an embodiment of the present disclosure. Referring to Figure 12, the apparatus may include: a processor 1, a communication interface 2, a memory 3, and a communication bus 4.

The processor 1, the communication interface 2, and the memory 3 communicate with each other via the communication bus 4.

Optionally, the communication interface 2 may be an interface of a communications module, such as an interface of a GSM module.

The processor 1 is configured to execute a program.

The memory 3 is configured to store the program.

The program may include a program code, where the program code includes an operation instruction of computer.

The processor 1 may be a central processor unit CPU, an application specific integrated circuit ASIC (Application Specific Integrated Circuit), or one or more integrated circuits configured to implement embodiments of the present disclosure.

The memory 3 may include a high speed RAM memory, and may further include a non-volatile memory (non-volatile memory), such as at least one magnetic disk memory.

The program may be specifically configured to:

determine a target friend who has interacted with target recommended information among one or more friends of a target user;

determine data of interaction made by the target user with previously shared information published by the target friend;

determine an influence degree of the target friend on interaction to be made by the target user with the target recommended information based on the data of interaction made by the target user with the previously shared information published by the target friend;

determine a target influence degree based on the influence degree of the target friend on the interaction to be made by the target user with the target recommended information;

determine a probability degree of the interaction to be made by the target user with the target recommended information based on the target influence degree; and

push the target recommended information to the target user, in a case that the probability degree meets a preset condition.

A server is further provided to an embodiment of the present disclosure, where the server may include the information recommendation apparatus described above.

The embodiments of the present disclosure are described in a progressive manner, and each embodiment places emphasis on the difference from other embodiments. Therefore, the embodiments may be referred to one another for the same or similar parts. Since the apparatus embodiments correspond to the method embodiment, the description of the apparatus embodiments is simple. For the relevant portions, one may refer to the description of the method parts.

As further be appreciated by those skilled in the art, the units and algorithmic steps in the examples described according to the embodiments disclosed herein can be implemented in forms of an electronic hardware, computer software or the combination thereof. To illustrate the interchangeability of the hardware and the software clearly, the components and the steps in the examples are described generally according to functions in the above description. Whether hardware or software is used to implement the functions depending on a specific application and design constraints for the technical solution. For each specific application, different methods may be used by those skilled in the art to implement the described function, and such implementation should not be considered as departing from the scope of the innovation.

The steps of the method or algorithm described according to the embodiments disclosed herein may be implemented in forms of hardware, a software module executed by a processor or the combination thereof. The software module may be stored in a Random Access Memory (RAM), a memory, a Read-Only Memory (ROM), an electrically programmable ROM, an electrically erasable programmable ROM, a register, a hardware disk, a movable magnetic disk, CD-ROM or any other forms of storage medium well known in the art.

The above description of the embodiments disclosed herein enables those skilled in the art to implement or use the present invention whose scope is defined by the appended claims.

**Claims**

1. An information recommendation method, comprising:

> determining (S100, S400) a target friend who has interacted with target recommended information among one or more friends of a target user;
> determining (S110) data of interaction made by the target user with previously shared information published by the target friend;
> determining (S120) an influence degree of the target friend on interaction to be made by the target user with the target recommended information based on the data of interaction made by the target user with the previously shared information published by the target friend;
> determining (S130) a target influence degree based on the influence degree of the target friend on the interaction to be made by the target user with the target recommended information;
> determining (S140) a probability degree of the interaction to be made by the target user with the target recommended information based on the target influence degree; and
> pushing (S150) the target recommended information to the target user, in a case that the probability degree meets a preset condition, wherein the data of interaction made by the target user with the previously shared information published by the target friend has a linear relationship with the influence degree of the target friend on the interaction to be made by the target user with the target recommended information; and
> the determining (S120) the influence degree of the target friend on the interaction to be made by the target user with the target recommended information based on the data of interaction made by the target user with the previously shared information published by the target friend, comprises:
> determining the influence degree of the target friend on the interaction to be made by the target user with the target recommended information based on the linear relationship and the data of interaction made by the target user with the previously shared information published by the target friend, wherein the determining (S120) the influence degree of the target friend on the interaction to be made by the target user with the target recommended information based on the linear relationship and the data of interaction made by the target user with the previously shared information published by the target friend, comprises:

> determining (S420) the influence degree of the target friend j on the interaction to be made by the target user $i$ with the target recommended information, according to an equation $c_{ij} = w \cdot n_{ij} + b,$ wherein $c_{ij}$ is the influence degree of the target friend j on the interaction to be made by the target user $i$ with the target recommended information, $n_{ij}$ is the number of interactions made by the target user $i$ with the previously shared information published by the target friend $j$, $w$ is a preset interaction weight, and $b$ is a preset constant,
> **characterized in that**
> the determining (S130) the target influence degree based on the influence degree of the target friend on the interaction to be made by the target user with the target recommended information, comprises:
> determining (S430) the target influence degree according to an equation $InfluScore = newc_{ij} + f \cdot Influscore\_old,$ wherein $InfluScore$ is the target influence degree, $newc_{ij}$ is an influence degree of the target friend who made the latest interaction with the target recommended information, on the interaction to be made by the target user with the target recommended information, $f$ is a current time attenuation factor, and $InfluScore\_old$ is a sum of influence degrees of other target users.

2. The information recommendation method according to claim 1, wherein a process of determining the $w$ and the b comprises:

> pushing a plurality of pieces of the recommended information to a user and the target friend;
> counting the number of interactions made by the target friend with the plurality of pieces of the recommended information, and the number of interactions made by the user with the recommended information with which the target friend has interacted;
> determining a ratio of the number of interactions made by the user with the recommended information with which the target friend has interacted, to the number of interactions made by the target friend with the plurality of pieces of the recommended information, as a sample value $c_{sample}$ of the influence degree of the target friend on the interaction to be made by the user with the recommended information;
acquiring the number $n_{sample}$ of history interactions made by the user with the previously shared information published by the target friend; and
determining the $w$ and the $b$ by performing a multiple regression analysis algorithm on the sample value $c_{sample}$ of the influence degree and the number $n_{sample}$ of history interactions.

3. The information recommendation method according to claim 1, wherein

the $n_{ij}$ comprises a set of the numbers of interactions of all preset types made by the target user $i$ with the previously shared information published by the target friend $j$ and
the $w$ comprises a set of the weights of all the preset types.

4. The information recommendation method according to claim 1, wherein the determining the probability degree of the interaction to be made by the target user with the target recommended information based on the target influence degree, comprises:

determining an interest level of the target user in the target recommended information, and
determining the probability degree of the interaction to be made by the target user with the target recommended information based on the interest level and the target influence degree.

5. The information recommendation method according to claim 4, wherein determining that the probability degree meets the preset condition, comprises:

determining that the probability degree meets the preset condition in a case that the probability degree is greater than a preset probability degree; or
ranking each candidate recommended information comprising the target recommended information based on the probability degree corresponding to each candidate recommended information, after determining the probability degree of the interaction to be made by the target user with each candidate recommended information, and determining that the probability degree meets the preset condition in a case that a rank of the target recommended information meets a preset rank condition.

6. An information recommendation apparatus, comprising one or more processors (1) and storage mediums (3) storing an operation instruction, which, when executed by the one or more processors (1), causes said one or more processors (1) to perform the following steps:

determining a target friend who has interacted with target recommended information among one or more friends of a target user;
determining data of interaction made by the target user with previously shared information published by the target friend;
determining an influence degree of the target friend on interaction to be made by the target user with the target recommended information based on the data of interaction made by the target user with the previously shared information published by the target friend;
determining a target influence degree based on the influence degree of the target friend on the interaction to be made by the target user with the target recommended information;
determining a probability degree of the interaction to be made by the target user with the target recommended information based on the target influence degree; and
pushing the target recommended information to the target user, in a case that the probability degree meets a preset condition, wherein
the data of interaction made by the target user with the previously shared information published by the target friend has a linear relationship with the influence degree of the target friend on the interaction to be made by the target user with the target recommended information; and
the processors (1) are are further caused to perform the following step:

determining the influence degree of the target friend on the interaction to be made by the target user with the target recommended information based on the linear relationship and the data of interaction made by the target user with the previously shared information published by the target friend, wherein
the processors (1) are further caused to perform the following step:

determining the influence degree of the target friend j on the interaction to be made by the target user $i$ with the target recommended information, according to an equation $c_{ij} = w \cdot n_{ij} + b$, wherein $c_{ij}$ is the influence degree of the target friend j on the interaction to be made by the target user $i$ with the target rec-

ommended information, $n_{ij}$ is the number of interactions made by the target user /with the previously shared information published by the target friend $j$, $w$ is a preset interaction weight, and $b$ is a preset constant, **characterized in that** the processors (1) are further caused to perform the following step:

determining the target influence degree according to an equation *InfluScore = newc$_{ij}$ + f · Influscore_old,* wherein *InfluScore* is the target influence degree, newc$_{ij}$ is an influence degree of the target friend who made the latest interaction with the target recommended information, on the interaction to be made by the target user with the target recommended information, $f$ is a current time damping factor, and *InfluScore_old* is a sum of influence degrees of other target users.

7. A server, comprising the information recommendation apparatus according to claim 6.

**Patentansprüche**

1. Informationsempfehlungsverfahren, das umfasst:

Bestimmen (S100, S400) eines Zielfreundes, der mit empfohlenen Zielinformation unter einem oder mehreren Freunden eines Zielbenutzers interagiert hat;
Bestimmen (S110) von Daten über die Interaktion des Zielbenutzers mit zuvor freigegebener Information, die von dem Zielfreund veröffentlicht wurde;
Bestimmen (S120) eines Einflussgrades des Zielfreundes auf die Interaktion, die von dem Zielbenutzer mit den empfohlenen Zielinformation durchgeführt werden soll, basierend auf den Daten der Interaktion, die von dem Zielbenutzer mit der zuvor gemeinsam genutzten und von dem Zielfreund veröffentlichten Information durchgeführt wurde;
Bestimmen (S130) eines Zieleinflussgrades auf der Grundlage des Einflussgrades des Zielfreundes auf die vom Zielbenutzer vorzunehmende Interaktion mit der empfohlenen Zielinformation;
Bestimmen (S140) eines Wahrscheinlichkeitsgrades der Interaktion, die von dem Zielbenutzer mit der empfohlenen Zielinformation durchgeführt werden soll, basierend auf dem Zieleinflussgrad; und
Übermitteln (S150) der empfohlenen Zielinformation an den Zielbenutzer, falls der Wahrscheinlichkeitsgrad eine voreingestellte Bedingung erfüllt, wobei

die Daten der Interaktion, die von dem Zielbenutzer mit der vorher geteilten Information, die von dem Zielfreund veröffentlicht wurde, gemacht wurde, eine lineare Beziehung mit dem Einflussgrad des Zielfreundes auf die Interaktion, die von dem Zielbenutzer mit der empfohlenen Zielinformation gemacht werden soll, hat; und

das Bestimmen (S120) des Einflussgrades des Zielfreundes auf die Interaktion, die von dem Zielbenutzer mit den empfohlenen Zielinformationen durchgeführt werden soll, basierend auf den Daten der Interaktion, die von dem Zielbenutzer mit der zuvor geteilten Information, die von dem Zielfreund veröffentlicht wurden, durchgeführt wurde, umfasst:
Bestimmen des Einflussgrades des Zielfreundes auf die von dem Zielbenutzer vorzunehmende Interaktion mit der empfohlenen Zielinformation auf der Grundlage der linearen Beziehung und der Daten der von dem Zielbenutzer vorgenommenen Interaktion mit der zuvor gemeinsam genutzten und von dem Zielfreund veröffentlichten Information, wobei das Bestimmen (S120) des Einflussgrades des Zielfreundes auf die von dem Zielbenutzer vorzunehmende Interaktion mit der empfohlenen Zielinformation auf der Grundlage der linearen Beziehung und der Daten der von dem Zielbenutzer vorgenommenen Interaktion mit der zuvor gemeinsam genutzten und von dem Zielfreund veröffentlichten Information umfasst:

Bestimmen (S420) des Einflussgrades des Zielfreundes *j* auf die vom Zielbenutzer /vorzunehmende Interaktion mit der empfohlenen Zielinformation gemäß einer Gleichung $c_{ij} = w \cdot n_{ij} + b$ , wobei $c_{ij}$ der Einflussgrad des Zielfreundes *j auf die* vom Zielbenutzer *i vorzunehmende* Interaktion mit den empfohlenen Zielinformationen ist, $n_{ij}$ die Anzahl der Interaktionen ist, die vom Zielbenutzer *i* mit der zuvor geteilten und vom Zielfreund *j* veröffentlichten Information vorgenommen wurden, *w* eine voreingestellte Interaktionsgewichtung ist und *b* eine voreingestellte Konstante ist,
**dadurch gekennzeichnet, dass**
das Bestimmen (S130) des Zieleinflussgrades auf der Grundlage des Einflussgrades des Zielfreundes auf die vom Zielbenutzer vorzunehmende Interaktion mit der empfohlenen Zielinformation, umfasst:
Bestimmen (S430) des Zieleinflussgrades gemäß einer Gleichung *InfluScore = newc$_{ij}$*

+ $f \cdot Influscore\_old$ , wobei *InfluScore* der angestrebte Einflussgrad ist, $newc_{ij}$ ein Einflussgrad des Zielfreundes ist, der die letzte Interaktion mit der empfohlenen Zielinformation durchgeführt hat, auf die Interaktion, die von dem Zielbenutzer mit der empfohlenen Zielinformation durchgeführt werden soll, *f* ein aktueller Zeitabschwächungsfaktor ist, und *InfluScore_old* eine Summe von Einflussgraden anderer Zielbenutzer ist.

2. Informationsempfehlungsverfahren nach Anspruch 1, wobei ein Verfahren zur Bestimmung des *w* und des *b* umfasst:

     Übermitteln einer Vielzahl von empfohlener Information an einen Benutzer und den Zielfreund;
     Zählen der Anzahl der Interaktionen, die von dem Zielfreund mit der Vielzahl von Teilen der empfohlenen Information vorgenommen wurden, und der Anzahl der Interaktionen, die von dem Benutzer mit der empfohlenen Information vorgenommen wurden, mit denen der Zielfreund interagiert hat;
     Bestimmen eines Verhältnisses zwischen der Anzahl der Interaktionen, die der Benutzer mit der empfohlenen Information, mit der der Zielfreund interagiert hat, durchgeführt hat, und der Anzahl der Interaktionen, die der Zielfreund mit der Vielzahl von Teilen der empfohlenen Information durchgeführt hat, als einen Probenwert $c_{csample}$ des Einflussgrades des Zielfreundes auf die vom Benutzer vorzunehmende Interaktion mit der empfohlenen Information;
     Erfassen der Anzahl $_{nsample}$ von historischen Interaktionen, die von dem Benutzer mit der zuvor geteilten Information, die von dem Zielfreund veröffentlicht wurden, durchgeführt wurde; und
     Bestimmen von *w* und *b* durch Ausführen eines Algorithmus zur multiplen Regressionsanalyse für den Probenwert $c_{csample}$ des Einflussgrades und der Anzahl $_{nsample}$ der historischen Interaktionen.

3. Informationsempfehlungsverfahren nach Anspruch 1, wobei

     die $n_{ij}$ eine Menge der Anzahl der Interaktionen aller voreingestellten Typen umfasst, die von dem Zielnutzer *i* mit der zuvor von dem Zielfreund *j* veröffentlichten Information vorgenommen wurde, und
     die *w* aus einer Menge der Gewichte aller voreingestellten Typen besteht.

4. Informationsempfehlungsverfahren nach Anspruch 1, wobei das Bestimmen des Wahrscheinlichkeitsgrades der Interaktion, die von dem Zielbenutzer mit der empfohlenen Zielinformation durchgeführt werden soll, basierend auf dem Zieleinflussgrad, umfasst:

     Bestimmen eines Interesses des Zielbenutzers an der empfohlenen Zielinformation, und Bestimmen des Wahrscheinlichkeitsgrades der Interaktion, die von dem Zielbenutzer mit der empfohlenen Zielinformation durchgeführt werden soll, auf der Grundlage des Interessenniveaus und des Zieleinflussgrades.

5. Informationsempfehlungsverfahren nach Anspruch 4, wobei die Bestimmung, dass der Wahrscheinlichkeitsgrad die vorgegebene Bedingung erfüllt, umfasst:

     Feststellen, dass der Wahrscheinlichkeitsgrad die vorgegebene Bedingung erfüllt, wenn der Wahrscheinlichkeitsgrad größer als ein vorgegebener Wahrscheinlichkeitsgrad ist; oder Einordnen jeder empfohlenen Kandidateninformation, die die empfohlene Zielinformation umfasst, auf der Grundlage des Wahrscheinlichkeitsgrads, der jeder empfohlenen Kandidateninformation entspricht, nachdem der Wahrscheinlichkeitsgrad der Interaktion bestimmt wurde, die von dem Zielbenutzer mit jeder empfohlenen Kandidateninformation durchgeführt werden soll, und Bestimmen, dass der Wahrscheinlichkeitsgrad die voreingestellte Bedingung in einem Fall erfüllt, dass ein Rang der empfohlenen Zielinformation eine voreingestellte Rangbedingung erfüllt.

6. Informationsempfehlungsvorrichtung, die einen oder mehrere Prozessoren (1) und Speichermedien (3) umfasst, die einen Betriebsbefehl speichern, der, wenn er von dem einen oder den mehreren Prozessoren (1) ausgeführt wird, den einen oder die mehreren Prozessoren (1) veranlasst, die folgenden Schritte durchzuführen:

     Bestimmen eines Zielfreundes, der mit empfohlener Zielinformation interagiert hat, unter einem oder mehreren Freunden eines Zielbenutzers;
     Bestimmen von Daten über die Interaktion des Zielbenutzers mit zuvor freigegebener Information, die von dem Zielfreund veröffentlicht wurde;
     Bestimmen eines Einflussgrades des Zielfreundes auf die Interaktion, die von dem Zielbenutzer mit der empfohlenen Zielinformation durchgeführt werden soll, basierend auf den Daten der Interaktion, die von dem Zielbenutzer mit der zuvor geteilten Information, die von dem Zielfreund veröffentlicht wurde, durchgeführt wurde;
     Bestimmen eines Zieleinflussgrades auf der Grundlage des Einflussgrades des Zielfreundes auf die vom Zielbenutzer vorzunehmende Interaktion mit der empfohlenen Zielinformation;

Bestimmen eines Wahrscheinlichkeitsgrades der Interaktion, die von dem Zielbenutzer mit der empfohlenen Zielinformation durchgeführt werden soll, basierend auf dem Zieleinflussgrad; und

Übermitteln der empfohlenen Zielinformation an den Zielbenutzer, wenn der Wahrscheinlichkeitsgrad eine vorgegebene Bedingung erfüllt, wobei

die Daten der Interaktion, die von dem Zielbenutzer mit der zuvor geteilten Information, die von dem Zielfreund veröffentlicht wurden, durchgeführt wurden, eine lineare Beziehung mit dem Einflussgrad des Zielfreundes auf die Interaktion, die von dem Zielbenutzer mit der empfohlenen Zielinformation durchgeführt werden soll, aufweisen; und

werden die Prozessoren (1) ferner veranlasst, den folgenden Schritt auszuführen:

Bestimmen des Einflussgrades des Zielfreundes auf die Interaktion, die von dem Zielbenutzer mit der empfohlenen Zielinformation durchgeführt werden soll, basierend auf der linearen Beziehung und den Daten der Interaktion, die von dem Zielbenutzer mit der zuvor geteilten Information, die von dem Zielfreund veröffentlicht wurde, durchgeführt wurde, wobei

die Prozessoren (1) ferner veranlasst werden, den folgenden Schritt auszuführen:

Bestimmen des Einflussgrades des Zielfreundes $j$ auf die vom Zielbenutzer $i$ vorzunehmende Interaktion mit der empfohlenen Zielinformation gemäß einer Gleichung $c_{ij} = w \cdot n_{ij} + b$, wobei $c_{ij}$ der Einflussgrad des Zielfreundes $j$ auf die vom Zielbenutzer $i$ vorzunehmende Interaktion mit der empfohlenen Zielinformation ist, $n_{ij}$ die Anzahl der Interaktionen ist, die vom Zielbenutzer $i$ mit der zuvor geteilten und vom Zielfreund $j$ veröffentlichten Information vorgenommen wurde, $w$ eine voreingestellte Interaktionsgewichtung ist und $b$ eine voreingestellte Konstante ist, **dadurch gekennzeichnet, dass** die Prozessoren (1) ferner veranlasst werden, den folgenden Schritt auszuführen:

Bestimmen des Zieleinflussgrades gemäß einer Gleichung $InfluScore = new\text{-}c_{ij} + f \cdot Influscore\_old$, wobei $InfluScore$ der Zieleinflussgrad ist, new$neuc_{ij}$ ein

Einflussgrad des Zielfreundes ist, der die letzte Interaktion mit der empfohlenen Zielinformation durchgeführt hat, auf die Interaktion, die von dem Zielbenutzer mit der empfohlenen Zielinformation durchgeführt werden soll, $f$ ein aktueller Zeitdämpfungsfaktor ist, und $InfluScore\_old$ eine Summe von Einflussgraden anderer Zielbenutzer ist.

**7.** Server, der die Informationsempfehlungsvorrichtung nach Anspruch 6 umfasst.

**Revendications**

**1.** Procédé de recommandation d'informations, consistant à :

déterminer (S100, S400) un ami cible qui a interagi avec des informations recommandées cibles parmi un ou plusieurs amis d'un utilisateur cible;

déterminer (S110) des données d'interaction produite par l'utilisateur cible avec des informations partagées précédemment publiées par l'ami cible;

déterminer (S120) un degré d'influence de l'ami cible sur l'interaction à produire par l'utilisateur cible avec les informations recommandées cibles sur la base des données d'interaction produite par l'utilisateur cible avec les informations partagées précédemment publiées par l'ami cible;

déterminer (S130) un degré d'influence cible sur la base du degré d'influence de l'ami cible sur l'interaction à produire par l'utilisateur cible avec les informations recommandées cibles;

déterminer (S140) un degré de probabilité de l'interaction à produire par l'utilisateur cible avec les informations recommandées cibles sur la base du degré d'influence cible; et

pousser (S150) les informations recommandées cibles vers l'utilisateur cible, au cas où le degré de probabilité satisfait une condition prédéfinie, dans lequel

les données d'interaction produite par l'utilisateur cible avec les informations partagées précédemment publiées par l'ami cible ont une relation linéaire avec le degré d'influence de l'ami cible sur l'interaction à produire par l'utilisateur cible avec les informations recommandées cibles; et

la détermination (S120) du degré d'influence de l'ami cible sur l'interaction à produire par l'utilisateur cible avec les informations recommandées cibles sur la base des données d'interaction produite par l'utilisateur cible avec les informations partagées précédemment publiées par l'ami cible, consiste à:

déterminer le degré d'influence de l'ami cible sur l'interaction à produire par l'utilisateur cible avec les informations recommandées cibles sur la base de la relation linéaire et des données d'interaction produite par l'utilisateur cible avec les informations partagées précédemment publiées par l'ami cible, dans lequel la détermination (S120) du degré d'influence de l'ami cible sur l'interaction à produire par l'utilisateur cible avec les informations recommandées cibles sur la base de la relation linéaire et des données d'interaction produite par l'utilisateur cible avec les informations partagées précédemment publiées par l'ami cible, consiste à :

déterminer (S420) le degré d'influence de l'ami cible $j$ sur l'interaction à produire par l'utilisateur cible $i$ avec les informations recommandées cibles, selon une équation $cij = w \cdot n_{ij} + b$, dans laquelle $c_{ij}$ est le degré d'influence de l'ami cible $j$ sur l'interaction à produire par l'utilisateur cible $i$ avec les informations recommandées cibles, $n_{ij}$ est le nombre d'interactions produites par l'utilisateur cible $i$ avec les informations partagées précédemment publiées par l'ami cible $j$, $w$ est un poids d'interaction prédéfini, et $b$ est une constante prédéfinie, **caractérisé en ce que** la détermination (S130) du degré d'influence cible sur la base du degré d'influence de l'ami cible sur l'interaction à produire par l'utilisateur cible avec les informations recommandées cibles, consiste à: déterminer (S430) le degré d'influence cible selon une équation $Influscore = newc_{ij} + f \cdot Influscore\_old,$ dans laquelle $InfluScore$ est le degré d'influence cible, $newc_{ij}$ est un degré d'influence de l'ami cible qui a produit la dernière interaction avec les informations recommandées cibles, sur l'interaction à produire par l'utilisateur cible avec les informations recommandées cibles, $f$ est un facteur d'atténuation de temps actuel, et $IntluScore\_old$ est une somme des degrés d'influence d'autres utilisateurs cibles.

2. Procédé de recommandation d'informations selon la revendication 1, dans lequel un processus de détermination du $w$ et du $b$ consiste à:

pousser une pluralité de parties des informations recommandées à un utilisateur et à l'ami cible; compter le nombre d'interactions de l'ami cible avec la pluralité de parties des informations recommandées, et le nombre d'interactions produites par l'utilisateur avec les informations recommandées avec lesquelles l'ami cible a interagi; déterminer un rapport entre le nombre d'interactions produites par l'utilisateur avec les informations recommandées avec lesquelles l'ami cible a interagi, et le nombre d'interactions produites par l'ami cible avec la pluralité de parties des informations recommandées, en tant que valeur d'échantillon $c_{sample}$ du degré d'influence de l'ami cible sur l'interaction à produire par l'utilisateur avec les informations recommandées; acquérir le nombre $n_{sample}$ d'interactions historiques faites par l'utilisateur avec les informations partagées précédemment publiées par l'ami cible; et déterminer le $w$ et le $b$ par application d'un algorithme d'analyse de régression multiple sur la valeur d'échantillon $c_{sample}$ du degré d'influence et du nombre $n_{sample}$ d'interactions historiques.

3. Procédé de recommandation d'informations selon la revendication 1, dans lequel

le $n_{ij}$ comprend un ensemble des nombres d'interactions de tous les types prédéfinis produites par l'utilisateur cibler $i$ avec les informations partagées précédemment publiées par l'ami cible $j$ et le $w$ comprend un ensemble des poids de tous les types prédéfinis.

4. Procédé de recommandation d'informations selon la revendication 1, dans lequel la détermination du degré de probabilité de l'interaction à produire par l'utilisateur cible avec les informations recommandées cibles sur la base du degré d'influence cible, consiste à:

déterminer un niveau d'intérêt de l'utilisateur cible pour les informations recommandées cibles, et déterminer le degré de probabilité de l'interaction à produire par l'utilisateur cible avec les informations recommandées cibles sur la base du niveau d'intérêt et du degré d'influence cible.

5. Procédé de recommandation d'informations selon la revendication 4, dans lequel la détermination que le degré de probabilité remplit la condition prédéfinie, consiste à:

déterminer que le degré de probabilité remplit la condition prédéfinie au cas où le degré de probabilité est supérieur à un degré de probabilité prédéfini; ou classer chaque information recommandée candidate comprenant les informations recommandées cibles sur la base du degré de probabilité correspondant à chaque information recommandée candidate, après détermination du degré de probabilité de l'interaction à produire par l'utilisateur cible avec chaque information recommandée candidate, et déterminer que le degré de probabilité remplit la condition prédéfinie dans un cas où un classement des informations recommandées cibles remplit une condition de classement prédéfinie.

6. Appareil de recommandations d'informations, comprenant un ou plusieurs processeurs (1) et des supports de stockage (3) stockant une instruction d'opération, qui, lorsqu'elle est exécutée par le ou les processeurs (1), amène ledit ou lesdits processeurs (1) à réaliser les étapes suivantes consistant à:

déterminer un ami cible qui a interagi avec des informations recommandées cibles parmi un ou plusieurs amis d'un utilisateur cible;
déterminer des données d'interaction produite par l'utilisateur cible avec des informations partagées précédemment publiées par l'ami cible;
déterminer un degré d'influence de l'ami cible sur l'interaction à produire par l'utilisateur cible avec les informations recommandées cibles sur la base des données d'interaction produite par l'utilisateur cible avec les informations partagées précédemment publiées par l'ami cible;
déterminer un degré d'influence cible sur la base du degré d'influence de l'ami cible sur l'interaction à produire par l'utilisateur cible avec les informations recommandées cibles;
déterminer un degré de probabilité de l'interaction à produire par l'utilisateur cible avec les informations recommandées cibles sur la base du degré d'influence cible; et
pousser les informations recommandées cibles à l'utilisateur cible, au cas où le degré de probabilité satisfait une condition prédéfinie, dans lequel
les données d'interaction produite par l'utilisateur cible avec les informations partagées précédemment publiées par l'ami cible ont une relation linéaire avec le degré d'influence de l'ami cible sur l'interaction à produire par l'utilisateur cible avec les informations recommandées cibles; et
les processeurs (1) sont amenés à réaliser l'étape suivante consistant à:

déterminer le degré d'influence de l'ami cible sur l'interaction à produire par l'utilisateur cible avec les informations recommandées cibles sur la base de la relation linéaire et des données d'interaction produite par l'utilisateur cible avec les informations partagées précédemment publiées par l'ami cible, dans lequel
les processeurs (1) sont amenés à réaliser l'étape suivante consistant à:

déterminer (S420) le degré d'influence de l'ami cible $j$ sur l'interaction à produire par l'utilisateur cible $i$ avec les informations recommandées, selon une équation $c_{ij} = w \cdot n_{ij} + b$, dans laquelle $c_{ij}$ est le degré d'influence de l'ami cible $j$ sur l'interaction à produire par l'utilisateur cible $i$ avec les informations recommandées cibles, $n_{ij}$ est le nombre d'interactions produites par l'utilisateur cible $i$ avec les informations partagées précédemment publiées par l'ami cible $j$, $w$ est un poids d'interaction prédéfini, et $b$ est une constante prédéfinie, **caractérisé en ce que** les processeurs (1) sont en outre amenés à réaliser l'étape suivante consistant à:
déterminer le degré d'influence cible selon une équation $Influscore = newc_{ij} + f \cdot Influscore\_old,$ dans laquelle $InfluScore$ est le degré d'influence cible, $newc_{ij}$ est un degré d'influence de l'ami cible qui a produit la dernière interaction avec les informations recommandées cibles, sur l'interaction à produire par l'utilisateur cible avec les informations recommandées cibles, $f$ est un facteur d'atténuation de temps actuel, et $InfluScore\_old$ est une somme des degrés d'influence d'autres utilisateurs cibles.

7. Serveur, comprenant l'appareil de recommandations d'informations selon la revendication 6.

Determine a target friend who has interacted with target recommended information among one or more friends of the target user ⟋— S100

Determine data of interaction made by the target user with previously shared information published by the target friend ⟋— S110

Determine an influence degree of the target friend on interaction to be made by the target user with the target recommended information based on the data of interaction made by the target user with the previously shared information published by the target friend ⟋— S120

Determine a target influence degree based on the influence degree of the target friend on the interaction to be made by the target user with the target recommended information ⟋— S130

Determine a probability degree of the interaction to be made by the target user with the target recommended information based on the target influence degree ⟋— S140

Push the target recommended information to the target user, in a case that the probability degree meets a preset condition ⟋— S150

**Figure 1**

```
                                                                              ┌─ S200
┌──────────────────────────────────────────────────────────────┐
│  Push multiple pieces of the recommended information to a user and │
│                  a friend of the user                          │
└──────────────────────────────────────────────────────────────┘
                              ↓
┌──────────────────────────────────────────────────────────────┐  ┌─ S210
│ Count the number of interactions made by the friend of the user with │
│    the multiple pieces of the recommended information, and the │
│    number of interactions made by the user with the recommended │
│   information with which the friend of the user has interacted │
└──────────────────────────────────────────────────────────────┘
                              ↓
┌──────────────────────────────────────────────────────────────┐
│   Determine a ratio of the number of interactions made by the user │
│ with the recommended information with which the friend of the user │
│  has interacted, to the number of interactions made by the friend of │  ┌─ S220
│ the user with the multiple pieces of the recommended information, │
│   as a sample value $c_{\text{sample}}$ of the influence degree of the friend of the │
│        user on the interaction to be made by the user with the │
│                 recommended information                        │
└──────────────────────────────────────────────────────────────┘
                              ↓                                      ┌─ S230
┌──────────────────────────────────────────────────────────────┐
│ Acquire the number $n_{sample}$ of history interactions of the user with the │
│   previously shared information published by the friend of the user │
└──────────────────────────────────────────────────────────────┘
                              ↓
┌──────────────────────────────────────────────────────────────┐  ┌─ S240
│   Determine the w and the b by performing a multiple regression │
│   analysis algorithm on the sample value $c_{\text{sample}}$ of the influence │
│     degree and the number $n_{sample}$ of history interactions │
└──────────────────────────────────────────────────────────────┘
```

**Figure 2**

Determine a target friend $j$ who has interacted with target recommended information among one or more friends of the target user $i$ — S300

Determine the number of interactions of each preset type made by the target user $i$ with previously shared information published by the target friend $j$, and collect the number of interactions of each preset type to acquire a set $n_{ij}$ — S310

Determine an influence degree of the target friend $j$ on interaction to be made by the target user $i$ with the target recommended information, according to an equation $c_{ij} = w \cdot n_{ij} + b$, where $c_{ij}$ is the influence degree of the target friend $j$ on the interaction to be made by the target user $i$ with the target recommended information, $w$ is a set of weights corresponding to interactions of all the preset types, and $b$ is a preset constant — S320

Determine a target influence degree based on the influence degree of each of the target friends on the interaction to be made by the target user with the target recommended information — S330

Determine a probability degree of the interaction to be made by the target user with the target recommended information based on the target influence degree — S340

Push the target recommended information to the target user, in a case that the probability degree meets a preset condition — S350

**Figure 3**

Determine a target friend *j* who has interacted with target recommended information among one or more friends of the target user *i* ⟋ S400

Determine the number of interactions of each preset type made by the target user *i* with previously shared information published by the target friend *j*, and collect the number of interactions of each preset type to acquire a set $n_{ij}$ ⟋ S410

Determine an influence degree of the target friend *j* on interaction to be made by the target user *i* with the target recommended information, according to an equation $c_{ij} = w \cdot n_{ij} + b$, where $c_{ij}$ is the influence degree of the target friend *j* on the interaction to be made by the target user *i* with the target recommended information, *w* is a set of weights corresponding to all the preset types, and *b* is a preset constant ⟋ S420

Determine a target influence degree according to an equation *InfluScore* = new$c_{ij}$ + *f InfluScore_old* , where *InfluScore* is the target influence degree, new$c_{ij}$ is an influence degree of the target friend who has interacted with the target recommended information in a time period just before the current time, on the interaction to be made by the target user with the target recommended information, *f* is a current time damping factor, and *InfluScore_old* is a sum of influence degrees of other target users ⟋ S430

Determine an interest level of the target user in the target recommended information, and determine a probability degree of the interaction to be made by the target user with the target recommended information based on the interest level and the target influence degree ⟋ S440

Push the target recommended information to the target user, in a case that the probability degree meets a preset condition ⟋ S450

**Figure 4**

**Figure 5**

**Figure 6**

300

Influence degree
determining module

310

Linear calculation unit

**Figure 7**

310

Linear calculation unit

311

Equation
calculation unit

**Figure 8**

Figure 9

Figure 10

400

Target influence degree
determining module

Attenuation and
addition processing unit

420

**Figure 11**

program

Processor

1

Memory

3

Communication bus

4

Communication
interface

2

**Figure 12**

**EP 3 404 556 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610019783
- US 2011320462 A1
- US 2013046770 A1